# FASCICULE DE BREVET EUROPEEN

(11) **EP 2 070 234 B1**
(45) Date de publication et mention de la délivrance du brevet: **06.05.2020**
(21) Numéro de dépôt: 07823771.6
(22) Date de dépôt: 05.09.2007
(51) Int. Cl.: H04K 1/00

(54) **SÉCURISATION DE CODE POUR ENTITÉ PERSONNELLE**
SICHERUNG EINES KODES FÜR PERSÖNLICHE DATENSÄTZE
SECURING OF CODE FOR PERSONAL ENTITY

(30) Priorité: 07.09.2006 FR 0653620
(43) Date de publication de la demande: 17.06.2009
(73) Titulaire: Orange, 75015 Paris (FR)
(72) Inventeur: BARRE, Christian, F-35830 Betton (FR); LE ROUZIC, Jean-Pierre, F-35700 Rennes (FR)
(74) Mandataire: Regimbeau
(86) Numéro de dépôt international: PCT/FR2007/051874
(87) Numéro de publication internationale: WO 2008/029059

(56) Documents cités:
- EP-A1- 2 002 371
- EP-A2- 1 898 334
- WO-A-2004/077194
- WO-A1-2007/098569
- WO-A2-01/77792
- WO-A2-2006/039364
- FR-A- 2 834 157
- US-B1- 6 209 104
- PIM TUYLS ET AL: "Visual Crypto Displays Enabling Secure Communications" SECURITY IN PERVASIVE COMPUTING 2003, 2004, pages 271-284, XP019002204

## Description

La présente invention concerne une sécurisation d'un code personnel pour une entité personnelle, telle qu'une carte à puce. Le code est appelé également code PIN ("Personal Identity Number" en anglais) souvent saisi pour une transaction électronique, l'identification d'un usager, une non répudiation ou une gestion de droit numérique DRM ("Digital Right Management" en anglais).

L'invention concerne plus généralement la sécurisation de tout code personnel tel qu'un mot de passe à saisir dans un environnement non sécurisé.

Il est connu de l'état de l'art les documents suivants: D2 XP019002204 de PIM TUYLS ET AL: "Visual Crypto Displays Enabling Secure Communications".

Le document FR2834157 décrit un procédé et un dispositif d'authentification entre un poste utilisateur à écran et un organe d'identification au moyen d'un code graphique définit par des coordonnées.

L'invention est définie par les revendications indépendantes. Les modes de réalisation préférés sont définis par les revendications dépendantes.

L'identification formelle sécurisée d'un usager par exemple lors d'une transaction électronique entre deux terminaux dans un réseau de télécommunications peut nécessiter une carte à puce appartenant à l'usager et contenant des données secrètes. La carte est insérée dans un lecteur de carte de l'un des terminaux. Les données secrètes constituées par un code personnel unique, dit code PIN, sont saisies par l'usager sur une interface homme-machine du terminal.

Lors d'un vol ou d'une perte de la carte à puce, le code PIN a pour avantage de n'être connu que de l'usager de la carte et un tiers ne peut donc en faire usage. Cependant, des virus informatiques actifs dans les terminaux sont conçus pour détecter le code PIN saisi par l'usager par exemple et ainsi le transmettre à une autre entité électronique ou l'utiliser pour accéder directement aux données secrètes de la carte.

Pour remédier à cet inconvénient, on a déjà proposé lors de la fabrication ou de la commercialisation de la carte, de préenregistrer plusieurs codes PIN différents dans la carte, chaque code étant enregistré pour une unique utilisation. Une liste de ces codes est adressée à l'usager de la carte sous pli confidentiel. Cependant, le nombre limité de codes PIN restreint le nombre d'utilisations de la carte. En outre, un nombre élevé de codes PIN préenregistrés est difficilement mémorisable par l'usager de la carte. La perte ou le vol de la liste de ces codes rend l'emploi de la carte obsolète.

Il est également bien connu d'inscrire un code confidentiel unique sur l'une des faces de la carte à puce et de le saisir par l'usager de la carte lors d'une transaction électronique, par exemple un achat en ligne sans l'utilisation de la carte à puce. Ce code imposé par le constructeur de la carte et connu du fournisseur de la carte, par exemple une banque, évite à un fraudeur ne possédant pas de carte à puce de créer un faux numéro de carte et d'initier des transactions sécurisées en ligne, celles-ci nécessitant la saisie du code inscrit sur la carte.

Actuellement, pour saisir de manière sécurisée le code PIN d'une carte à puce, un terminal doit être relié à un dispositif externe tel qu'un clavier dont les transactions entre le terminal et le dispositif sont limitées afin d'éviter toute contamination d'un virus dans le dispositif. Cette solution est peu ergonomique et très coûteuse.

Pour remédier aux inconvénients évoqués ci-dessus, un procédé pour sécuriser un code personnel d'un usager donnant accès à des données incluses dans une entité personnelle, est caractérisé en ce qu'il comprend :
un établissement et un affichage d'une représentation graphique comprenant des caractères représentatifs du code personnel et associée à au moins une consigne,
une sélection desdits caractères par l'usager sur la représentation graphique affichée en fonction de ladite au moins une consigne,
une comparaison des premières coordonnées associées aux caractères sélectionnés par l'usager à des deuxièmes coordonnées de caractères représentatifs du code personnel associées à la représentation graphique, et
une transmission des données si les premières et deuxièmes coordonnées correspondent.

L'invention sécurise le code personnel d'un usager pour autoriser l'accès à des données incluses dans l'entité personnelle, telle qu'une carte à puce, après avoir établi une représentation graphique de caractères qui est affichée dans une entité de traitement de code, telle qu'un terminal, la représentation incluant des caractères représentatifs du code personnel. L'usager sélectionne des caractères qui sont représentatifs du code personnel dans la représentation graphique affichée et qui ne peuvent pas être prédits par un attaquant en surveillant les caractères sélectionnés de manière à en déduire un comportement répétitif de l'usager.

Selon une caractéristique de l'invention, le procédé comprend un établissement de la représentation graphique de caractères modifiée après un nombre prédéterminé de demandes successives des données.

Pour plus de sécurité, la représentation graphique peut être modifiée à chaque demande des données de l'entité personnelle; en d'autres termes, la représentation graphique varie d'une demande de données à la suivante. Par exemple, la représentation graphique est modifiée par une modification de la disposition des caractères. Toutefois plus généralement, la représentation graphique est modifiée après un nombre prédéterminé de demandes successives des données, le nombre prédéterminé étant égal ou supérieur à 1. Par exemple, le nombre prédéterminé est inférieur à six. Un virus informatique actif dans l'entité de traitement de code ne peut alors déduire le code personnel de codes saisis par l'usager.

Selon un premier aspect de l'invention, la représentation graphique est une table ayant un nombre prédéterminé de cases dont certaines sont associées respectivement à des caractères alphanumériques incluant les caractères du code personnel et sont disposées aléatoirement dans la table.

Selon un deuxième aspect de l'invention, la représentation graphique est associée à au moins une consigne, afin que l'usager y sélectionne les caractères du code personnel en fonction de ladite au moins une consigne. Les consignes peuvent être modifiées après le nombre prédéterminé de demandes successives des données. La représentation graphique peut comprendre plusieurs ensembles distincts de caractère dont un est à sélectionner selon les consignes pour que l'usager y sélectionne les caractères représentatifs du code personnel. En variante, la représentation graphique peut alors comprendre plusieurs ensembles distincts de caractère dont au moins deux à sélectionner selon les consignes pour que l'usager y sélectionne les caractères représentatifs du code personnel.

L'invention concerne aussi un procédé pour sécuriser un code personnel d'un usager donnant accès à des données incluses dans une entité personnelle. Le procédé est caractérisé en ce qu'il comprend :
Un établissement d'une représentation graphique comprenant des caractères représentatifs du code personnel et associée à au moins une consigne,
une comparaison de premières coordonnées associées à des caractères représentatifs du code personnel et sélectionnés par l'usager sur la représentation graphique affichée en fonction d'au moins une consigne, à des deuxièmes coordonnées de caractères représentatifs du code personnel associées à ladite représentation graphique, et
une transmission des données si les premières et deuxièmes coordonnées correspondent.

Selon une caractéristique de l'invention, le procédé comprend un établissement de la représentation graphique de caractères modifiée après un nombre prédéterminé de demandes successives des données. En variante, la représentation graphique est modifiée par une modification de la disposition des caractères.

Selon des aspects du procédé pour sécuriser un code personnel, la représentation graphique peut être une table ayant un nombre prédéterminé de cases, ou être associée à des consignes et comprendre plusieurs ensembles distincts de caractère, comme indiqué ci-dessus.

L'invention est également relative à une entité personnelle pour sécuriser un code personnel d'un usager donnant accès à des données incluses dans l'entité personnelle, caractérisée en ce qu'elle comprend :
Un moyen (UE) pour établir une représentation graphique (REPₙ) comprenant des caractères (CR) représentatifs du code personnel et associée à au moins une consigne (CS1, CS2),
un moyen pour comparer des premières coordonnées associées à des caractères représentatifs du code personnel et sélectionnés par l'usager sur la représentation graphique affichée en fonction de ladite au moins une consigne à des deuxièmes coordonnées de caractères représentatifs du code personnel associées à ladite représentation graphique, et
un moyen pour transmettre les données si les premières et deuxièmes coordonnées correspondent.

L'entité personnelle comporte des moyens pour mettre en œuvre le procédé décrit précédemment.

L'invention se rapporte aussi à un produit programme d'ordinateur téléchargeable depuis un réseau de communication et/ou stocké sur un support lisible par ordinateur et/ou exécutable par un processeur. Le produit programme comprend des instructions pour la mise en œuvre des étapes suivantes:
un établissement et un affichage d'une représentation graphique comprenant des caractères représentatifs du code personnel et associée à au moins une consigne,
une sélection desdits caractères par l'usager sur la représentation graphique affichée en fonction de ladite au moins une consigne,
une comparaison des premières coordonnées associées aux caractères sélectionnés par l'usager à des deuxièmes coordonnées de caractères représentatifs du code personnel associées à la représentation graphique, et
une transmission des données si les premières et deuxièmes coordonnées correspondent.

L'invention concerne encore un procédé de traitement de code pour sélectionner par un usager un code personnel donnant accès à des données incluses dans une entité personnelle. Le procédé est caractérisé en ce qu'il comprend :
un affichage d'une représentation graphique comprenant des caractères représentatifs du code personnel et associée à au moins une consigne,
une sélection desdits caractères par l'usager sur la représentation graphique affichée en fonction de ladite au moins une consigne,
une détermination de premières coordonnées associées aux caractères sélectionnés par l'usager, et
une transmission des premières coordonnées déterminées à l'entité personnelle afin que l'entité personnelle compare les premières coordonnées transmises à des deuxièmes coordonnées de caractères représentatifs du code personnel associées à la représentation graphique et transmette les données demandées si les premières et deuxièmes coordonnées correspondent.

Selon des aspects du procédé de traitement de code, la représentation graphique peut être modifiée par une modification de la disposition des caractères, ou être une table ayant un nombre prédéterminé de cases, ou être associée à des consignes et comprendre plusieurs ensembles distincts de caractère, comme indiqué ci-dessus.

D'autres caractéristiques et avantages de la présente invention apparaîtront plus clairement à la lecture de la description suivante de plusieurs aspects de l'invention données à titre d'exemples non limitatifs, en référence aux dessins annexés correspondants dans lesquels :
- la figure 1 est un bloc-diagramme schématique d'un système de sécurisation de code personnel comprenant une entité personnelle et une entité de traitement de code ;
- la figure 2 est un bloc-diagramme représentatif d'une architecture matérielle pour chaque entité du système de sécurisation de code personnel selon l'invention ;
- les figures 3, 4 et 5 sont des exemples de représentation graphique de caractères affichée selon l'invention ; et
- la figure 6 est un algorithme du procédé selon l'invention pour sécuriser un code personnel d'usager.

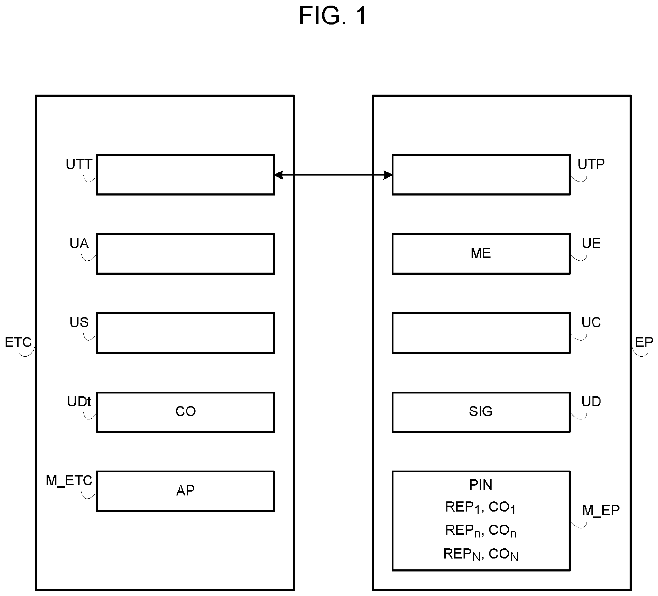

En référence à la figure 1, un système de sécurisation de code personnel d'usager d'entité personnelle, dit code PIN ("Personal Identity Number" en anglais), comprend une entité personnelle EP, telle qu'une carte à puce, associée avec ou sans contact à une entité de traitement de code ETC, telle qu'un terminal.

Une application cliente AP dans l'entité de traitement de code ETC est activée par l'usager de l'entité personnelle EP associée à l'entité de traitement de code ETC et ouvre un canal de communication avec une entité externe, appelée serveur de ressources, tel qu'un serveur d'achat en ligne à travers un réseau de télécommunications. Afin que l'usager puisse accéder via l'application à des ressources sécurisées du serveur, le serveur demande à l'application de lui transmettre des données telles qu'une signature identifiant l'usager. La signature est fournie par l'entité personnelle EP de l'usager et est accessible après une sélection du code personnel PIN de l'usager, par exemple sur un clavier relié à l'entité de traitement de code ETC.

Pour éviter qu'un tiers ne détecte le code personnel PIN de l'usager lors de sa sélection, l'invention établit une représentation graphique aléatoire, par exemple similaire à un clavier numérique, et des consignes de sélection afin que l'usager saisisse son code personnel à partir de cette représentation graphique, la représentation graphique pouvant être différente à chaque demande des données, ou modifiée après un nombre prédéterminé de demandes successives des données par exemple compris entre deux et cinq.

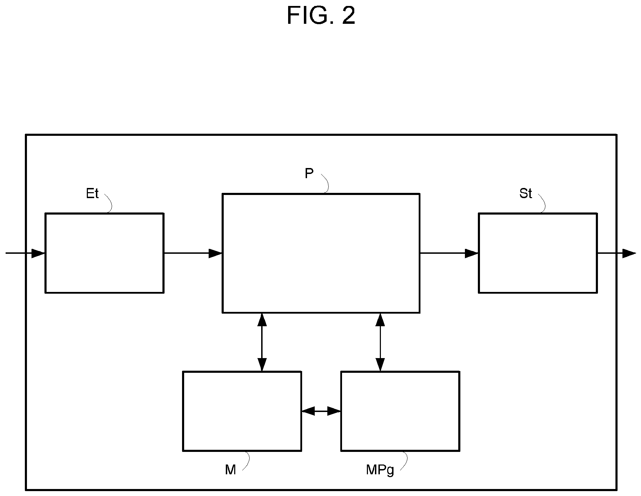

Dans la figure 2, on a représenté une architecture matérielle pour l'entité personnelle EP et l'entité de traitement de code ETC. L'architecture comprend une mémoire M, une unité de traitement équipée par exemple d'un microprocesseur P et piloté par des programmes d'ordinateur mémorisés dans une mémoire MPg mettant en œuvre les procédés selon l'invention. Un module d'entrée Et et un module de sortie St tels que des interfaces de communication sont respectivement disposés en entrée et en sortie de l'unité de traitement P.

Afin d'éviter toute confusion entre des éléments inclus dans les architectures des entités, chaque élément de l'architecture d'une entité est désigné ci-après dans la description en combinaison avec le repère désignant l'entité auquel il appartient. Ainsi l'entité personnelle EP comprend un processeur P_EP, une mémoire M_EP, une mémoire de programme MPg_EP, un module d'entrée Et_EP et un module de sortie St_EP. L'entité de traitement de code ETC comprend un processeur P_ETC, une mémoire M_ETC, une mémoire de programme MPg_ETC, un module d'entrée Et_ETC et un module de sortie St_ETC.

Dans la figure 1, on a représenté l'entité de traitement de code ETC et l'entité personnelle EP sous forme de blocs fonctionnels dont la plupart assurent des fonctions ayant un lien avec l'invention et peuvent correspondre à des modules logiciels et/ou matériels.

L'entité de traitement de code ETC en tant que terminal comprend une unité de transmission UTT, une unité d'affichage UA, une unité de sélection US et une unité de détermination de coordonnées UDt. En se référant à la figure 2, l'unité de transmission UTT englobe les modules Et_ETC et St_ETC et l'unité de détermination de coordonnées UDt est mémorisée dans la mémoire de programme MPg_ETC.

La mémoire M_ETC comporte notamment une application cliente AP, telle qu'une application d'achat en ligne.

L'entité de traitement ETC peut être un assistant numérique personnel communicant PDA, un terminal domestique portable ou non comme une console de jeux vidéo ou un récepteur de télévision intelligent coopérant avec une télécommande à afficheur ou un clavier alphanumérique servant également de souris à travers une liaison infrarouge.

En variante, l'unité d'affichage UA et l'unité de sélection US, d'une part, et l'unité de détermination UDt d'autre part, sont respectivement deux terminaux distincts dont chacun possède une architecture analogue à celle représentée à la figure 2.

L'entité personnelle EP en tant que carte à puce comprend principalement une unité de transmission UTP pour échanger des messages avec l'unité de transmission UTT de l'entité de traitement de code ETC, une unité d'établissement UE d'une représentation graphique de caractère, une unité de comparaison de coordonnées de caractère UC et une unité de données UD.

La mémoire M_EP est une mémoire non volatile par exemple EEPROM ou Flash pour notamment mémoriser le code personnel PIN uniquement connu de l'usager de la carte.

Selon un aspect de l'invention, l'unité d'établissement UE comprend un mécanisme d'établissement ME d'une représentation graphique REPₙ d'un clavier numérique dont chaque touche du clavier comprend un ensemble de pixel identifié par des coordonnées numériques, l'indice n étant compris entre 1 et un entier N a priori grand. Par exemple, les coordonnées numériques de chaque touche du clavier sur un plan à deux dimensions comprennent une abscisse et une ordonnée dans un repère de référence sur l'écran de l'unité d'affichage UA.

La représentation graphique est transmise et affichable à l'usager dans l'entité de traitement de code ETC et doit être uniquement interprétable par l'usager et non directement par le processeur P_ETC de l'entité de traitement. La représentation REPₙ a pour particularité de pouvoir être différente par exemple à chaque demande d'un code personnel par l'entité personnelle.

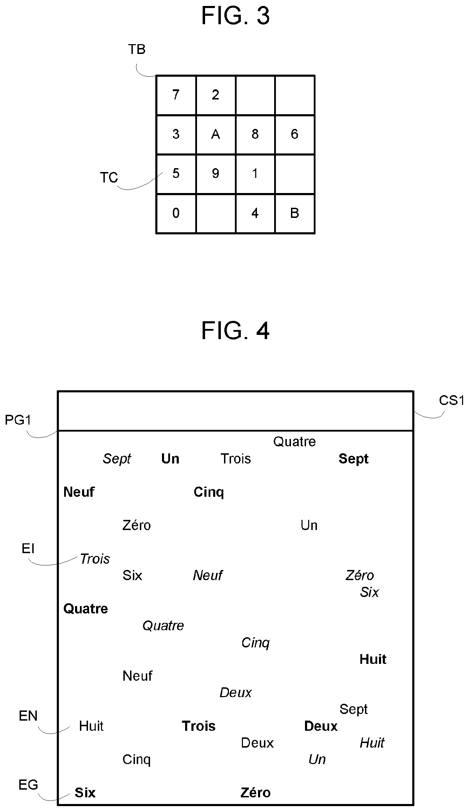

Selon un premier aspect montré à la figure 3, la représentation graphique REPₙ est une table TB ayant un nombre prédéterminé de cases dont certaines sont similaires à des touches de clavier TC et associées respectivement à des caractères alphanumériques. Par exemple, les caractères alphanumériques sont dix chiffres et deux lettres selon la figure 3. Les touches sont disposées aléatoirement dans la table à chaque affichage de celle-ci à l'usager, suite à une demande de données secrètes. Le nombre de cases de la table, par exemple égal à 16, est supérieur ou égal au nombre prédéterminé de caractères alphanumériques, chiffres lettres et/ou symboles. Les caractères alphanumériques incluent au moins les caractères du code personnel qui peuvent être sélectionnés sur l'écran par l'usager, par exemple au moyen d'un clavier classique ou d'une souris de l'entité de traitement, ou tactilement.

Selon un deuxième aspect montré à la figure 4, la représentation graphique REPₙ occupe presqu'une page d'écran PG1 incluant plusieurs ensembles de caractères alphanumériques, par exemple au nombre de trois EN, EI et EG ayant des polices différentes : normale, italique et gras. Les caractères alphanumériques dans les ensembles sont disposés aléatoirement dans la page d'écran PG1 à chaque affichage de celle-ci, suite à une demande des données secrètes. Les caractères alphanumériques des ensembles EN, EI et EG incluent au moins les caractères du code personnel qui peuvent être sélectionnés sur l'écran par l'usager. La représentation est associée à des consignes de sélection CS1 qui peuvent varier à chaque affichage de la représentation graphique à l'usager, suite à une demande des données secrètes. Les consignes CS1 sont, par exemple, "Pour la saisie et la sélection de votre code personnel, considérez uniquement les caractères en italique" et donc de l'ensemble EI, ou "Pour la saisie et la sélection de votre code personnel, considérez uniquement les caractères en gras" et donc de l'ensemble EG, ou "Saisissez votre premier et troisième caractères en italique, votre deuxième caractère en gras et votre quatrième caractère en police normale" pour un code personnel à quatre caractères.

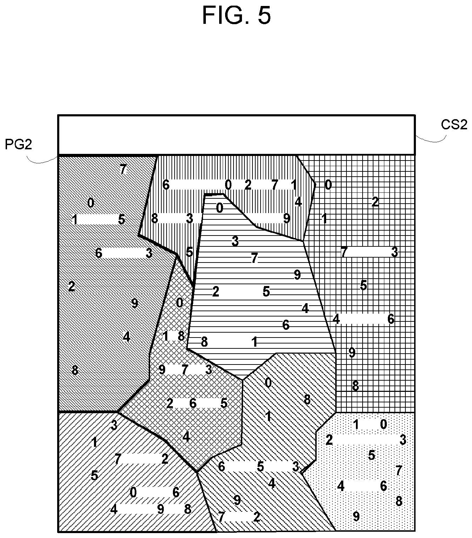

Selon un troisième aspect montré à la figure 5, la représentation graphique REPₙ est une page d'écran PG2 incluant plusieurs ensembles distincts de caractère alphanumérique respectivement affichés dans des zones ayant des hachures différentes et incluant au moins les caractères du code personnel qui peuvent être sélectionnés sur l'écran par l'usager. Par exemple, les ensembles sont au nombre de huit et contiennent chacun des caractères alphanumériques prédéterminés, en l'occurrence 10 chiffres, suite à une demande des données secrètes. Quelques uns des ensembles de caractère hachurés sont à sélectionner selon des consignes de sélection CS2 pour que l'usager sélectionne des caractères représentatifs du code personnel PIN dans les ensembles sélectionnés. Les consignes de sélection CS2 qui peuvent varier à chaque affichage de la page d'écran PG2 à l'usager sont par exemple :
"Veuillez sélectionner votre deuxième chiffre dans la zone à hachure horizontale, puis votre quatrième chiffre dans la zone à gauche de la zone à hachure en pointillé. Vous ne devez pas sélectionner votre premier chiffre dans une zone à hachure oblique. Sélectionnez dans la zone au-dessus de la zone à hachure en pointillé votre troisième chiffre et enfin le dernier chiffre de votre code dans la zone au-dessus de la zone à hachure horizontale."

En variante et relativement aux deuxième et troisième aspects, les consignes peuvent être transmises oralement ou sous pli confidentiel à l'usager.

Chaque représentation graphique REPₙ établie par le mécanisme ME est associée dans la carte à des coordonnées exactes COₙ de touches qui sont à sélectionner successivement en correspondance avec la suite de caractères successifs composant le code personnel PIN de l'usager. Par exemple, les coordonnées exactes de touches relatives à un code personnel à quatre caractères comprennent quatre jeux de coordonnées successifs correspondant respectivement aux quatre touches dont les dénominations représentent les quatre caractères du code personnel.

Selon une implémentation du mécanisme d'établissement ME dans l'unité d'établissement UE, des représentations REP₁ à REP_{N} sont enregistrées dans la mémoire M_EP et sont associées respectivement à des coordonnées exactes CO₁ à CO_{N} de touches à sélectionner représentatives du code personnel PIN de l'usager. Le mécanisme ME sélectionne aléatoirement dans la mémoire M_EP une représentation REPₙ, afin de l'afficher à l'usager dans l'entité de traitement ETC. La représentation REPₙ sélectionnée par le mécanisme ME est différente d'un affichage à l'autre.

En variante, le mécanisme ME génère aléatoirement une représentation REPₙ à afficher à l'usager dans l'entité de traitement ETC et détermine aléatoirement dans cette représentation les coordonnées exactes COₙ représentatives du code personnel PIN de l'usager, par exemple à raison d'un chiffre par ensemble de 10 chiffres pour quatre ensembles de 10 chiffres choisis aléatoirement parmi huit ensembles selon la figure 5.

L'unité de comparaison UC compare des premières coordonnées exactes COₙ associées à une représentation graphique de caractère établie par l'unité d'établissement UE à des deuxièmes coordonnées déterminées et transmises par l'entité de traitement représentatives du code personnel qui ont été sélectionnées par l'usager en fonction de la représentation graphique affichée par l'entité de traitement. Si les premières et deuxièmes coordonnées correspondent, l'accès aux données de l'unité de données UD est autorisé. Les premières et deuxièmes coordonnées sont mises en correspondance via une relation logique telle qu'une addition d'un coefficient ou une multiplication par un coefficient. En variante les premières et deuxièmes coordonnées sont identiques.

L'unité de données UD contrôle par exemple une opération telle qu'une détermination d'une signature SIG pour authentifier l'usager de l'entité EP ou l'incrémentation d'un compteur, et comprend des données personnelles de l'usager.

L'entité personnelle EP peut être une carte à puce incluse dans un ordinateur portable ou un terminal mobile, une carte de paiement, une carte de porte-monnaie électronique, une carte de santé, un passeport électronique, ou toute autre carte à microprocesseur associée à un terminal fixe ou mobile. L'entité personnelle EP peut être tout dispositif électronique personnel contenant des données dont un code personnel donne l'accès.

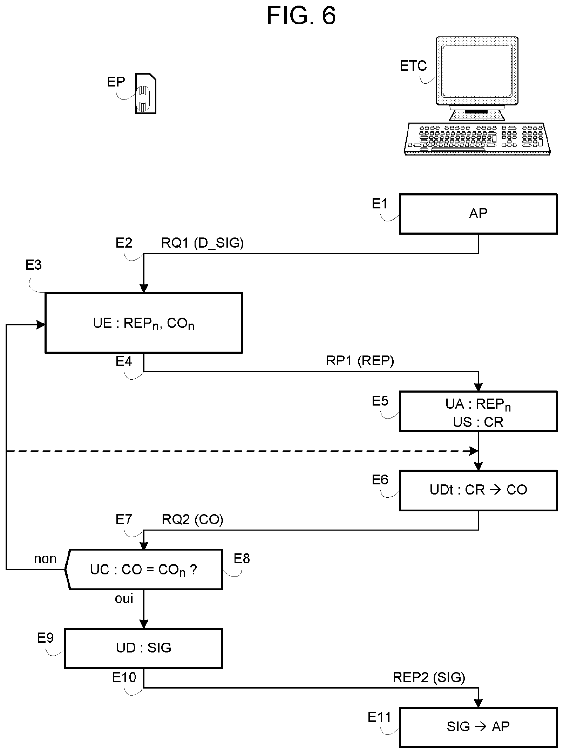

En se référant maintenant à la figure 6, la sécurisation du code personnel de l'usager de l'entité personnelle EP comprend les étapes E1 à E11.

A l'étape E1, l'usager sélectionne l'application cliente AP de l'entité de traitement ETC activée par le processeur P_ETC afin, par exemple, d'accéder à une ressource sécurisée dans le serveur de ressources. L'application AP ouvre un canal de communication avec le serveur via l'unité de transmission UTT de l'entité de traitement et demande l'accès à la ressource sécurisée souhaitée par l'usager dans le serveur de ressources. Pour authentifier l'usager et lui autoriser un accès à la ressource, le serveur de ressources demande à l'application AP de lui transmettre des données secrètes telles qu'une signature identifiant l'usager.

A l'étape E2, l'application AP fournit une requête RQ1 contenant une demande de signature D_SIG à l'entité personnelle EP via les unités de transmission UTT et UTP de l'entité de traitement de code ETC et de l'entité personnelle EP.

A la réception de la requête RQ1, à l'étape E3, le processeur P_EP active l'unité d'établissement UE qui va traiter la demande D_SIG. Le mécanisme ME établit une représentation graphique REPₙ, par exemple selon le premier aspect, en sélectionnant de manière aléatoire dans la mémoire M_EP de l'entité personnelle EP l'une REPn des représentations graphiques REP₁ à REP_{N}, et les coordonnées exactes associées COₙ des touches à sélectionner par l'usager.

A l'étape E4 suite à une interrogation périodique de l'entité de traitement ETC, l'unité d'établissement produit une réponse RP1 contenant la représentation REPₙ. La réponse RP1 est transmise à l'entité de traitement ETC via les unités de transmission UTP et UTT de l'entité personnelle EP et de l'entité de traitement ETC.

Le processeur P_ETC de l'entité de traitement met en veille l'application AP et active l'unité d'affichage UA qui traite la réponse RP1. A l'étape E5, l'unité d'affichage UA extrait de la réponse RP1 la représentation REPₙ et l'affiche. L'usager sélectionne au moyen de l'unité de sélection US les touches de la représentation affichée REPₙ dont les dénominations correspondent aux caractères CR du code personnel, en respectant d'éventuelles consignes de sélection associées à la représentation REPₙ et affichées, ou transmises oralement ou sous pli confidentiel.

A chaque caractère CR du code personnel saisi au moyen de l'unité de sélection US sur la représentation REPₙ, l'unité de détermination UDt activée par le processeur P_ETC détermine les coordonnées représentatives de la touche dont la zone active a été sélectionnée. A la fin de la sélection, l'unité de détermination comprend des coordonnées CO représentatives de l'ensemble des coordonnées des touches correspondant aux caractères du code personnel PIN de l'usager.

L'unité de détermination UDt introduit les coordonnées CO des touches sélectionnées dans une requête RQ2 transmise à la carte, à l'étape E7.

A l'étape E8, le processeur P_EP de la carte active l'unité de comparaison de la carte qui extrait de la requête les coordonnées CO fournies par l'entité de traitement et les compare aux coordonnées exactes COₙ associées à la représentation REPₙ. Si les coordonnées CO et COₙ correspondent, le processeur P_EP de la carte active l'unité de données UD afin d'accéder à des données par exemple en déterminant une signature SIG, à l'étape E9.

A l'étape E10, l'unité de données UD produit et transmet une réponse RP2 incluant la signature déterminée SIG à l'entité de traitement ETC. A la réception de la réponse RP2 par l'entité de traitement à l'étape E11, le processeur P_ETC de l'entité de traitement ETC réveille l'application cliente AP, et lui fournit la signature SIG extraite de la réponse RP2. L'application AP continue son traitement, par exemple en transmettant au serveur de ressources la signature SIG.

Si à l'étape E8, les coordonnées CO et COₙ ne correspondent pas, alors le processeur P_EP de l'entité personnelle reboucle le procédé sur l'étape E3 pour afficher la représentation graphique précédente ou bien établir une autre représentation graphique à transmettre à l'entité de traitement ETC, en dépendance du nombre prédéterminé de demandes successives des données sans modification de la représentation graphique. En variante, le processeur P_EP de l'entité personnelle reboucle le procédé sur l'étape E6, représenté par un trait en pointillé, afin de demander à l'usager via l'unité d'affichage UA de sélectionner à nouveau le code personnel. Le nombre de boucles peut être limité.

En variante, si les coordonnées CO et COₙ sont différentes, alors le processeur P_EP de la carte fournit à l'entité de traitement ETC une notification de refus du code personnel qui provoque l'affichage d'un message de refus.

L'invention décrite ici concerne un procédé, une entité personnelle EP telle qu'une carte à puce et une entité de traitement de code ETC telle qu'un terminal associée à l'entité personnelle. Selon une implémentation, les étapes du procédé de l'invention sont déterminées par les instructions de programmes d'ordinateur incorporés respectivement dans l'entité personnelle EP et dans l'entité de traitement ETC. Les programmes comportent des instructions de programme qui, lorsque lesdits programmes sont exécutés respectivement dans l'entité personnelle et dans l'entité de traitement de code dont le fonctionnement est alors commandé par l'exécution des programmes, réalisent les étapes du procédé selon l'invention.

En conséquence, l'invention s'applique également à des programmes d'ordinateur, notamment des programmes d'ordinateur enregistrés chacun sur ou dans un support d'informations lisible par un ordinateur et tout dispositif de traitements de données, adapté à mettre en œuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker les programmes. Par exemple, le support peut comporter un moyen de stockage ou support d'enregistrement sur lequel sont enregistrés les programmes d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type internet.

Alternativement, le support d'informations peut être un circuit intégré dans lequel les programmes sont incorporés, le circuit étant adapté pour exécuter ou pour être utilisé dans l'exécution des procédés selon l'invention.

## Revendications

1. Procédé pour sécuriser un code personnel d'un usager donnant accès à des données (SIG) incluses dans une entité personnelle (EP), **caractérisé en ce qu'**il comprend :
un établissement (E3) et un affichage (E5) d'une représentation graphique (REPₙ) comprenant des caractères (CR) représentatifs du code personnel,
un établissement d'au moins une consigne (CS1, CS2) de sélection associée à la représentation graphique (REPₙ), dans lequel ladite consigne de sélection varie d'un affichage à l'autre de la représentation graphique,
une sélection (E5) desdits caractères (CR) par un usager de l'entité personnelle sur la représentation graphique affichée en fonction de la consigne de sélection établie,
une comparaison (E8) entre des premières coordonnées associées aux caractères sélectionnés et des deuxièmes coordonnées de caractères représentatifs du code personnel associées à la représentation graphique, et
une transmission (E10) des données si les premières et deuxièmes coordonnées correspondent
le procédé étant **caractérisé en ce que** la consigne de sélection est transmise audit usager de l'entité personnelle oralement ou préalablement sous pli confidentiel.

2. Procédé conforme à la revendication 1, comprenant un établissement (E3) de la représentation graphique de caractères (REPₙ) modifiée après un nombre prédéterminé de demandes successives des données (D_SIG).

3. Procédé conforme à la revendication 1 ou 2, selon lequel la représentation graphique (REPₙ) est modifiée par une modification de la disposition des caractères.

4. Procédé conforme à l'une des revendications 1 à 3, selon lequel la représentation graphique (REPₙ) est une table (TB) ayant un nombre prédéterminé de cases dont certaines sont associées respectivement à des caractères alphanumériques incluant les caractères (CR) du code personnel et sont disposées aléatoirement dans la table.

5. Procédé conforme à l'une des revendications 1 à 3, selon lequel la représentation graphique (REPₙ) comprend plusieurs ensembles distincts de caractère (PG1) dont un est à sélectionner selon la consigne.

6. Procédé conforme à l'une des revendications 1 à 3, selon lequel la représentation graphique (REPₙ) comprend plusieurs ensembles de caractère (PG2) dont au moins deux sont à sélectionner selon la consigne.

## Patentansprüche

1. Verfahren zum Sichern eines persönlichen Codes eines Benutzers, welcher einen Zugriff auf Daten (SIG) ermöglicht, die in einer persönlichen Einheit (EP) enthalten sind, **dadurch gekennzeichnet, dass** es umfasst:
eine Erstellung (E3) und eine Anzeige (E5) einer graphischen Darstellung (REPₙ), welche Zeichen (CR) umfasst, die für den persönlichen Code repräsentativ sind,
eine Erstellung wenigstens einer Auswahlanweisung (CS1, CS2), die der graphischen Darstellung (REPₙ) zugeordnet ist, wobei die Auswahlanweisung von einer Anzeige der graphischen Darstellung zur anderen variiert,
eine Auswahl (E5) der Zeichen (CR) durch einen Benutzer der persönlichen Einheit auf der angezeigten graphischen Darstellung in Abhängigkeit von der erstellten Auswahlanweisung,
einen Vergleich (E8) zwischen ersten Koordinaten, die den ausgewählten Zeichen zugeordnet sind, und zweiten Koordinaten von für den persönlichen Code repräsentativen Zeichen, die der graphischen Darstellung zugeordnet sind, und
eine Übertragung (E10) der Daten, falls die ersten und zweiten Koordinaten übereinstimmen,
wobei das Verfahren **dadurch gekennzeichnet ist, dass** die Auswahlanweisung dem Benutzer der persönlichen Einheit mündlich oder im Voraus vertraulich übermittelt wird.

2. Verfahren nach Anspruch 1, welches eine Erstellung (E3) der geänderten graphischen Darstellung von Zeichen (REPₙ) nach einer vorbestimmten Anzahl von aufeinander folgenden Anforderungen der Daten (D_SIG) umfasst.

3. Verfahren nach Anspruch 1 oder 2, wobei die graphische Darstellung (REPₙ) durch eine Änderung der Anordnung der Zeichen geändert wird.

4. Verfahren nach einem der Ansprüche 1 bis 3, wobei die graphische Darstellung (REPₙ) eine Tabelle (TB) mit einer vorbestimmten Anzahl von Feldern ist, von denen einige jeweils alphanumerischen Zeichen zugeordnet sind, welche die Zeichen (CR) des persönlichen Codes beinhalten und in der Tabelle zufällig angeordnet sind.

5. Verfahren nach einem der Ansprüche 1 bis 3, wobei die graphische Darstellung (REPₙ) mehrere verschiedene Zeichenmengen (PG1) umfasst, von denen eine gemäß der Anweisung auszuwählen ist.

6. Verfahren nach einem der Ansprüche 1 bis 3, wobei die graphische Darstellung (REPₙ) mehrere Zeichenmengen (PG2) umfasst, von denen wenigstens zwei gemäß der Anweisung auszuwählen sind.

## Claims

1. Method for securing a personal code of a user that provides access to data (SIG) contained in a personal device (EP), **characterized in that** it comprises:
setting up (E3) and displaying (E5) a graphical representation (REPₙ) comprising characters (CR) that are representative of the personal code,
setting up at least one selection instruction (CS1, CS2) associated with the graphical representation (REPₙ), wherein said selection instruction varies from one displaying of the graphical representation to the next,
a user of the personal device selecting (E5) said characters on the graphical representation that is displayed according to the selection instruction that is set up,
comparing (E8) first coordinates that are associated with the selected characters and second coordinates that are representative of the personal code which are associated with the graphical representation, and
transmitting (E10) data if the first and second coordinates correspond,
the method being **characterized in that** the selection instruction is transmitted to said user of the personal device verbally or beforehand confidentially.

2. Method according to Claim 1, comprising an operation of setting up (E3) the graphical representation of characters (REPₙ), which representation is modified after a predetermined number of successive data requests (D_SIG).

3. Method according to Claim 1 or 2, wherein the graphical representation (REPₙ) is modified by modifying the arrangement of the characters.

4. Method according to one of Claims 1 to 3, wherein the graphical representation (REPₙ) is a table (TB) having a predetermined number of cells, some of which are associated, respectively, with alphanumeric characters including the characters (CR) of the personal code and are arranged randomly in the table.

5. Method according to one of Claims 1 to 3, wherein the graphical representation (REPₙ) comprises a plurality of distinct character sets (PG1), one of which is to be selected according to the instruction.

6. Method according to one of Claims 1 to 3, wherein the graphical representation (REPₙ) comprises a plurality of character sets (PG2), at least two of which are to be selected according to the instruction.
